(19) **Europäisches Patentamt**
**European Patent Office**
**Office européen des brevets**

(11) **EP 4 198 073 B1**

(12) **FASCICULE DE BREVET EUROPEEN**

(45) Date de publication et mention
de la délivrance du brevet:
**09.04.2025 Bulletin 2025/15**

(51) Classification Internationale des Brevets (IPC):
**C08G 69/28** *(2006.01)*

(52) Classification Coopérative des Brevets (CPC):
**C08G 69/28;** B29B 7/007; B29B 7/38; B29B 7/7476

(21) Numéro de dépôt: **22213421.5**

(22) Date de dépôt: **14.12.2022**

(54) **PROCÉDÉ CONTINU DE PRÉPARATION DE POLYAMIDE PAR POLYCONDENSATION**

KONTINUIERLICHES VERFAHREN ZUR HERSTELLUNG VON POLYAMID DURCH
POLYKONDENSATION

CONTINUOUS PROCESS FOR PREPARING POLYAMIDE BY POLYCONDENSATION

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **15.12.2021 FR 2113593**

(43) Date de publication de la demande:
**21.06.2023 Bulletin 2023/25**

(73) Titulaire: **ARKEMA FRANCE
92700 Colombes (FR)**

(72) Inventeurs:
• **BRIFFAUD, Thierry
27470 SERQUIGNY (FR)**
• **SAILLARD, Benjamin
27470 SERQUIGNY (FR)**
• **PAILLARES, Célia
27470 SERQUIGNY (FR)**

(74) Mandataire: **Bandpay & Greuter
11 rue Christophe Colomb
75008 Paris (FR)**

(56) Documents cités:
**EP-A2- 1 980 585        WO-A1-2014/016521
DE-A1- 102011 014 467    US-A1- 2016 032 050
US-B1- 6 472 501**

**Description**

La présente invention concerne un procédé continu de préparation de polyamide par polycondensation.

Les polyamides sont, le plus souvent, préparées par polycondensation d'une diamine et d'un diacide. Ces réactions de polycondensation sont généralement réalisées dans un réacteur selon un procédé continu ou discontinu.

Généralement, la première étape consiste en la formation d'un sel à partir des monomères diacide carboxylique et diamine. Ce sel, éventuellement en solution aqueuse, est introduit dans un réacteur et chauffé sous pression jusqu'à l'obtention d'un mélange de viscosité suffisante. L'eau introduite initialement et ainsi que celle formée au cours de la réaction de polycondensation est éliminée du réacteur partiellement ou totalement au cours de cette étape. A la sortie de ce dernier, la viscosité est généralement insuffisante de sorte que des étapes additionnelles sont nécessaires pour augmenter le degré de polymérisation et obtenir des polyamides destinés à être extrudés notamment. Cette dernière étape consiste en un traitement thermique, souvent appelée une post-condensation. Elle peut être réalisée dans un réacteur discontinu ou continu à l'état fondu ou à l'état solide, éventuellement sous pression réduite.

Ces procédés requièrent non seulement des temps de réaction relativement longs (de l'ordre de plusieurs heures), mais également de multiples transferts de matière entre différents réacteurs lors des différentes étapes du procédé : synthèse du sel, polycondensation dans le réacteur et post-condensation.

Dans le cas où l'étape de post-condensation est réalisée à l'état solide, l'homogénéité des masses molaires obtenues est médiocre de même que leur stabilité. Enfin, dans ces conditions les temps de réaction sont très élevés ce qui induit une dépense énergétique élevée, et donc des coûts de production élevés.

Le chargement des monomères sous forme d'une solution aqueuse saline est couramment utilisé notamment pour contrôler la stœchiométrie. Cependant, cette solution est économiquement désavantageuse car elle requiert la dévolatilisation de grandes quantités d'eau pour obtenir la viscosité suffisante à la fin de l'étape de polycondensation et donc une grande quantité d'énergie ainsi que des équipements de grande taille.

Différentes alternatives visant à améliorer ces procédés ont été décrites dans la littérature.

Plusieurs d'entre elles comprennent une étape de préparation d'un prépolymère dans un réacteur, généralement avec un procédé discontinu, suivie d'une étape de post-condensation dans une extrudeuse, sous pression réduite, pour augmenter la masse molaire du polyamide. S'ils permettent d'optimiser l'étape de post-condensation, ces procédés restent longs et coûteux car ils nécessitent des transferts de matière et des manipulations, difficiles à mettre en œuvre à une échelle industrielle. De plus, l'isolation de prépolymères comportant des fins de chaînes proches de l'iso-stœchiométrie avec des viscosités et des teneurs en fins de chaînes stables à chaque batch, est difficile à réaliser industriellement. Souvent, la solution à cette difficulté implique l'utilisation de prépolymères terminés diacide ou diamine, ce qui impose l'introduction de quantités importantes de monomères fluides dans l'extrudeuse, entraînant des difficultés de mélange dans l'extrudeuse, et des pertes importantes en monomères notamment sur l'opération est réalisée sous pression réduite. Un tel procédé est notamment décrit dans la demande EP 0 410 649.

Avec une unique étape de condensation en extrudeuse en introduisant directement les monomères en entrée de l'extrudeuse, les masses molaires obtenues en sortie restent limitées et souvent inférieures à celles nécessaires pour transformer le produit dans de bonnes conditions notamment par extrusion du fait des faibles temps de séjour dans ce type d'équipement (typiquement inférieurs à 5 minutes). Un tel procédé est notamment décrit dans la demande EP 0 410 650, dans lequel la viscosité en solution inhérente maximale obtenue est de 0,35 dL/g ce qui correspond à une Mn de seulement 4400 g/mol.

La demande EP 2 877 516 propose de réaliser toutes les étapes de réaction et de polycondensation à partir des monomères de polyamide, dans une seule et unique extrudeuse comportant au moins deux vis d'acheminement tournant de manière corotative. Cela nécessite l'utilisation d'au moins 2 zones de dégazage de l'eau de condensation, ce qui rend difficile la gestion des pertes en monomères que ce soit en termes de quantité ou de variabilité. De plus, la faible viscosité du produit au début de l'extrudeuse rend compliquée la gestion des remontées de matière au niveau du premier dégazage. En outre, pour atteindre des temps de séjour permettant l'obtention de produit avec une viscosité élevée, il est nécessaire soit d'utiliser des extrudeuses bivis de grande taille (L/D ≥ 50), soit des extrudeuses multivis complexes à maintenir, ce qui dans les deux cas entraîne un procédé coûteux et difficile à mettre en œuvre à l'échelle industrielle. Enfin, l'efficacité de chauffe par les fourreaux des extrudeuses est faible alors que la dévolatilisation de l'eau nécessite des quantités d'énergie importantes, car ces équipements ont été conçus pour apporter la majorité de l'énergie au produit par l'intermédiaire de l'énergie mécanique dissipée, alors que cette dernière est faible dans le cas d'une extrudeuse utilisée pour réaliser toutes les étapes de réaction et de polycondensation du fait de la faible viscosité moyenne du produit dans l'équipement.

L'objectif de la présente invention est de proposer un procédé de préparation de polyamide, plus simple à mettre en œuvre, moins coûteux en énergie de production, avec des temps de cycle plus courts.

Brève description de l'invention

Ainsi, la présente invention a pour objet un procédé continu de préparation de polyamide par condensation comprenant les étapes consécutives suivantes :

a) fusion d'un mélange comprenant des monomères de polyamide dans une extrudeuse ou un co-malaxeur, lesdits monomères étant introduits dans l'extrudeuse ou le co-malaxeur sans ajout d'eau, et

b) réaction de polycondensation du mélange obtenu à l'issue de l'étape a) dans un réacteur-mélangeur d'axe horizontal, le procédé étant réalisé sous une pression proche de la pression atmosphérique.

Par « pression proche de la pression atmosphérique » on entend une pression comprise entre la pression atmosphérique et la pression atmosphérique +100 mbars, avantageusement une pression comprise entre la pression atmosphérique et la pression atmosphérique +50 mbars, encore plus avantageusement une pression comprise entre la pression atmosphérique et la pression atmosphérique +10 mbars.

Les monomères sont introduits dans l'extrudeuse ou le co-malaxeur sans ajout d'eau. En conséquence, cela permet de supprimer certaines étapes telles que l'évaporation de l'eau habituellement ajoutée dans les procédés de l'art antérieur, et en conséquence de limiter l'énergie de chauffage nécessaire pour cette évaporation, et donc le temps de cycle du procédé. De plus, cela permet de diminuer les pertes en monomère en limitant l'entraînement par la vapeur d'eau.

De plus, l'intégralité de la dévolatilisation a lieu dans l'étape b), ce qui contribue à réduire l'énergie à apporter à l'extrudeuse ou co-malaxeur de fusion, ainsi qu'à limiter la perte de monomère.

En outre, selon un autre avantage, ce procédé est réalisé à une pression proche de la pression atmosphérique, ce qui contribue également à réduire l'énergie nécessaire à la production, limiter la perte de monomère lors des dégazages et donc également le coût de production par rapport à un procédé sous pression réduite.

De plus, par rapport à un procédé sous pression réduite cela permet d'éviter une dégradation du polymère par oxydation en cas d'entrée d'air dans le réacteur de polymérisation, et de limiter l'encrassement du réacteur. L'utilisation d'un procédé sous pression réduite demande ainsi beaucoup de précautions et est donc difficile à mettre en œuvre.

L'absence d'apport d'eau supplémentaire avec les monomères ainsi que le fait de travailler à une pression proche de la pression atmosphérique permettent avantageusement de réduire la taille de l'installation, et d'obtenir notamment un débit de production de polyamide rapporté au coût de l'installation plus avantageux que les solutions proposées par l'art antérieur.

Par ailleurs, le fait de réaliser la réaction de polycondensation dans un réacteur-mélangeur permet, par rapport à une polycondensation dans une extrudeuse, d'obtenir un meilleur renouvellement de l'interface liquide/gaz et donc un dégazage de composés volatils, tels que l'eau de polycondensation, plus efficace.

Ce dégazage est de plus facilité par le fait qu'à la différence d'une extrudeuse le réacteur-mélangeur présente une phase gazeuse continue le long du ou des vis. Généralement la proportion de remplissage du réacteur-mélangeur par la phase liquide est comprise entre 20 et 75% de l'espace initialement disponible dans le réacteur-mélangeur.

En outre, contrairement à une polycondensation réalisée dans une extrudeuse comme décrit dans la EP 2 877 516, le réacteur-mélangeur permet de mieux contrôler les apports thermiques au cours de la polycondensation en limitant l'échauffement incontrôlé du produit par dissipation de l'énergie mécanique d'agitation, ce qui diminue les risques de dégradation thermique du polyamide. En outre, le réacteur-mélangeur permet d'accéder à des temps de séjour plus élevés, avantageusement supérieurs à 5 minutes, de préférence supérieurs à 15 minutes. En conséquence, ce procédé permet avantageusement d'obtenir une meilleure qualité de produit, en termes de constance de qualité et également en termes de viscosité atteignable.

Le procédé permet avantageusement d'obtenir des polyamides avec une masse molaire élevée sans qu'il soit nécessaire de mettre en œuvre une étape ultérieure additionnelle de post-condensation réalisée en sortie du réacteur-mélangeur, telle qu'une post-condensation à l'état solide.

D'autres caractéristiques avantageuses du procédé selon l'invention sont précisées dans la suite :

- le polyamide préparé selon le procédé est un polyamide aliphatique, cycloaliphatique, arylaliphatique, aromatique, ou semi-aromatique ;
- le polyamide est notamment choisi parmi le polyamide 11,11/B10, 11/BI/BT, B10, B12, MXD10, MXD.6, 11/10T, 11/BACT/10T, BACT/10T ;

PA11 est le polyamide obtenu à partir de la polycondensation d'acide 11-amino-undécanoïque (A11),
11/B10 est un copolyamide obtenu par la polycondensation d'acide 11- amino-undécanoïque (A11) avec la bis-(3-méthyl-4-aminocyclohexyl)-méthane (ou 3,3'-diméthyl-4,4'-diamino-dicyclohexyl-méthane) dénommé également BMACM ou MACM (appelée B dans cette description) et l'acide sébacique (10).
11/BI/BT est un copolyamide obtenu par la polycondensation d'acide 11-amino-undécanoïque (A11) de la bis-(3-méthyl-4-aminocyclohexyl)-méthane (ou 3,3'-diméthyl-4,4'-diamino-dicyclohexyl-méthane) dénommé également BMACM ou MACM (appelée B dans cette description), avec l'acide isophtalique (I) et l'acide téréphtalique (T).

B10 est un homopolyamide obtenu par la polycondensation de la bis-(3-méthyl-4-aminocyclohexyl)-méthane (ou 3,3'-diméthyl-4,4'-diamino-dicyclohexyl-méthane) dénommé également BMACM ou MACM (appelée B dans cette description) avec l'acide sébacique (10).

B12 est un homopolyamide obtenu par la polycondensation de la bis-(3-méthyl-4-aminocyclohexyl)-méthane (ou 3,3'-diméthyl-4,4'-diamino-dicyclohexyl-méthane) dénommé également BMACM ou MACM (appelée B dans cette description) avec l'acide dodécanedioïque (12)

MXD10 est un homopolyamide obtenu par la polycondensation de la méta-xylylène diamine avec l'acide sébacique (10).

MXD6 est un homopolyamide obtenu par la polycondensation de la méta-xylylène diamine avec l'acide adipique (6).

11/10T est un copolyamide obtenu par la polycondensation d'acide 11- amino-undécanoïque (A11) avec la décanediamine (10) et l'acide téréphtalique (T).

BACT/10T est un copolyamide obtenu par la polycondensation de la bis-(3-méthyl-4-aminocyclohexyl)-méthane (ou 3,3'-diméthyl-4,4'-diamino-dicyclo-hexyl-méthane) dénommé également BMACM ou MACM (appelée B dans cette description) avec la décanediamine (10) et l'acide téréphtalique (T).

11/BACT/10T est un copolyamide obtenu par la polycondensation d'acide 11-amino-undécanoïque (A11) avec la 1,3-bis(aminométhyl)cyclohexane (BAC), l'acide téréphtalique (T) et la décanediamine (10),

- le mélange à l'étape a) comprend des additifs ;
- les additifs comprennent au moins un catalyseur, au moins un stabilisant, au moins un antioxydant, au moins un limiteur de chaîne, et au moins un anti-mousse ;
- l'étape a) est réalisée dans une extrudeuse, de préférence comportant au moins deux vis, plus préférentiellement deux vis, notamment co-rotatives ;
- la fusion du mélange de monomères est réalisée dans l'extrudeuse ou le co-malaxeur en chauffant le mélange à une température en sortie de l'étape a) comprise entre 160°C et 300°C ;
- le mélange obtenu à l'étape a) est introduit dans le réacteur-mélangeur à l'étape b), sans dégazage préalable ;
- le réacteur-mélangeur comporte au moins deux arbres comportant des éléments d'agitation, de préférence co-rotatifs ;
- les arbres d'agitation du réacteur-mélangeur sont chauffés ;
- la réaction de polycondensation à l'étape b) est réalisée à une température d'au plus 50°C supérieure à la température de solidification du polyamide, et/ou supérieure de plus de 5°C par rapport à cette température de solidification, de préférence à une température comprise entre 240°C et 310°C ;
- l'étape b) est réalisée sous balayage de gaz inerte, de préférence à contre-courant.

Pour la mise en œuvre d'un procédé selon l'invention, un dispositif peut être utilisé, comprenant une extrudeuse ou un co-malaxeur reliés directement à l'entrée d'un réacteur-mélangeur, en particulier sans dispositif de dégazage intermédiaire entre le réacteur-mélangeur d'une part et l'extrudeuse ou co-malaxeur d'autre part.

**Brève description de la figure**

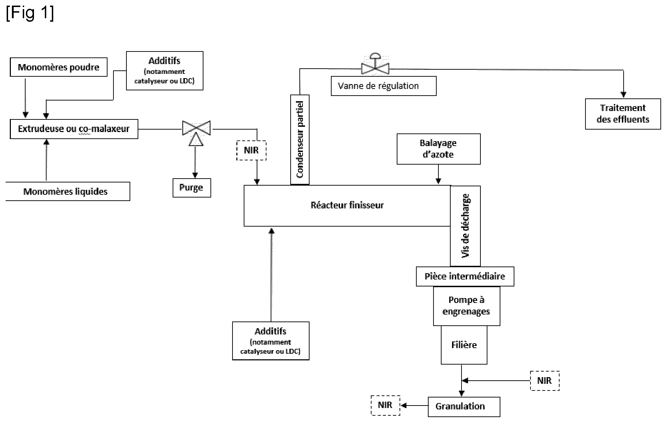

[Fig. 1] est un schéma du dispositif mettant en œuvre le procédé selon l'invention.

**Description détaillée de l'invention**

D'autres caractéristiques, aspects, objets et avantages de la présente invention apparaîtront encore plus clairement à la lecture de la description qui suit.

Il est précisé que les expressions « de ...à ... » et « compris entre ... et .... » utilisées dans la présente description doivent s'entendre comme incluant chacune des bornes mentionnées.

Le procédé selon l'invention comprend au moins les deux étapes consécutives précitées : étapes a) et b). Ce procédé peut comporter des étapes préalables ou postérieures à ces deux étapes a) et b), mais ne comprend pas d'étape intermédiaire entre les étapes a) et b).

Le procédé selon l'invention peut notamment s'appliquer à des polyamides aliphatiques, cycloaliphatiques, arylaliphatiques, aromatiques ou semi-aromatiques.

*Etape a) - Fusion d'un mélange comprenant des monomères de polyamide*

Lors de l'étape a), le mélange comprenant des monomères est porté à une température de fusion dans une extrudeuse ou un co-malaxeur, lesdits monomères étant introduits dans l'extrudeuse ou le co-malaxeur sans ajout d'eau.

En d'autres termes, les monomères de polyamide introduits dans l'extrudeuse ou le co-malaxeur ne sont pas solubilisés dans l'eau ou plus généralement dans un solvant.

Ainsi, de façon préférentielle, le mélange mis en œuvre à l'étape a) comprend une teneur en eau très faible, typiquement moins de 2 %, en particulier moins de 1% en poids d'eau par rapport au poids total du mélange.

L'eau éventuellement présente à l'issue de l'étape a) provient ainsi essentiellement de l'éventuel début de condensation des monomères après leur fusion.

*Monomères*

Les monomères de polyamides sont des monomères adaptés à la formation d'un polyamide. Ils peuvent être aliphatiques, cycloaliphatiques, arylaliphatiques, ou bien aromatiques. Ces monomères peuvent être sous la forme d'un sel anhydre ou d'une base ou d'un acide libre. Quelle que soit leur forme, les monomères sont introduits sans ajout d'eau ou de solvant dans l'extrudeuse ou le co-malaxeur.

Il peut s'agir d'un monomère incluant à la fois une fonction acide carboxylique et une fonction amine, c'est-à-dire un monomère de type amino-acide, ou alternativement d'au moins deux monomères, l'un portant deux fonctions amine et l'autre deux fonctions acide carboxylique ou un monomère équivalent de type anhydride d'acide carboxylique, ou il peut s'agir d'un monomère de type lactame en $C_3$-$C_6$, ou d'un mélange de ces différents monomères.

Par monomère amino-acide, on entend une molécule comprenant une chaîne hydrocarbonée, ayant généralement de 2 à 40 atomes de carbone, portant une fonction amine et une fonction acide carboxylique.

Parmi les monomères amino-acide, on peut citer notamment l'acide 6-amino-hexanoïque, l'acide 5-aminopentanoïque, l'acide 7-aminoheptanoïque, l'acide 11-aminoundécanoïque, ou l'acide 12-aminododécanoïque.

Par monomère diamine, on entend une molécule comprenant une chaîne hydrocarbonée, ayant généralement de 2 à 40 atomes de carbone, portant deux fonctions amine.

Les monomères diamine peuvent être notamment choisis parmi le 1,4-tétraméthylène diamine, le 1,5-pentaneméthylène diamine, le 1,6-hexaméthylène diamine, l'octane-1-éthylène diamine, le décaneméthylène diamine, le dodécaméthylène diamine, le m-xylylène diamine, le p-xylylène diamine, le bis-( 4-aminophényl)méthane, le bis-(4-aminocyclohexyl)méthane, le 2,2'-diméthyl-4,4'-méthylènebis(cyclohexylamine), le 1,3-bis(aminométhyl)cyclohexane, le 1,4-bis(aminométhyl)cyclohexane, le métaphénylènediamine, le paraphénylènediamine, le 2,2,4 ou 2,4,4-triméthylhexaméthylènediamine ou les mélanges de ces diamines.

Les monomères diamine peuvent être préférentiellement choisis parmi le, le décaneméthylène diamine, le m-xylylène diamine, le p-xylylène diamine, le bis-(4-aminocyclohexyl)méthane, le 2,2'-diméthyl-4,4'-méthylènebis(cyclohexylamine), le 1,3-bis(aminométhyl)cyclohexane, le 1,4-bis(aminométhyl)cyclohexane, ou les mélanges de ces diamines.

Par monomère diacide carboxylique, on entend une molécule comprenant une chaîne hydrocarbonée, ayant généralement de 2 à 40 atomes de carbone, portant deux fonctions acide carboxylique.

Les monomères diacides carboxyliques pouvant être utilisés sont notamment l'acide succinique, l'acide glutarique, l'acide adipique, l'acide pimélique, l'acide subérique, l'acide azélaïque, l'acide sébacique, l'acide undécanedioïque, l'acide 1,12-dodécanedioïque, l'acide dioléïque, l'acide phthalique, l'acide téréphtalique, l'acide isophtalique, l'acide 5-sulfoisophtalique, l'acide 1,4-cyclohexanedioïque, l'acide 1,3-cyclohexanedioïque ou les mélanges de ceux-ci.

Les monomères diacides carboxyliques pouvant être utilisés sont de préférence l'acide sébacique, l'acide 1,12-dodécanedioïque, l'acide téréphtalique, l'acide isophtalique, ou les mélanges de ceux-ci.

Par monomère lactame en $C_3$-$C_6$, on entend une amide incluse dans un cycle carboné comprenant de 3 à 6 atomes de carbone. A titre d'exemple, on peut citer le caprolactame.

Le mélange mis en œuvre à l'étape a) peut comprendre un ou plusieurs monomères choisis parmi les aminoacides, les couples de monomères diacide/diacide, ou un monomère de type lactame en $C_3$-$C_6$.

Les monomères sont de préférence conservés sous atmosphère de gaz inerte, ou sous balayage de gaz inerte, notamment d'azote, avant leur introduction dans l'extrudeuse ou le co-malaxeur, ceci afin d'éviter notamment l'introduction d'oxygène dans l'extrudeuse ou le co-malaxeur et de réduire ainsi les risques d'oxydation des monomères, ou oligomères, prépolymères ou polymères au cours du procédé. Ils peuvent éventuellement avoir été soumis à une étape de dégazage au préalable.

Les monomères peuvent être introduits dans l'extrudeuse ou le co-malaxeur sous différents états. Les monomères peuvent se trouver à l'état solide ou bien à l'état liquide.

A titre d'exemple, le monomère diamine introduit dans le réacteur peut se trouver à l'état liquide, et le monomère diacide carboxylique peut se trouver à l'état solide.

Aucune étape préalable de préparation d'un sel ou d'un prépolymère n'est nécessaire. Le ou les monomères sélectionnés peuvent être introduits directement dans l'extrudeuse ou le co-malaxeur.

Les monomères à l'état solide sont dosés au moyen de doseurs pour solide, de préférence gravimétriques, généralement avec une précision de 1% par rapport à la consigne de débit, de préférence de 0,5% et plus préférentiellement de 0,1%.

Ils peuvent être mis en œuvre sous balayage de gaz inerte, de préférence d'azote, de préférence sous une forme anhydre.

Ils peuvent être introduits dans l'extrudeuse ou le co-malaxeur via un chargeur pneumatique, avec éventuellement une phase d'inertage comprenant au moins une étape utilisant un gaz inerte, de préférence d'azote, de préférence anhydre.

Ils peuvent être éventuellement inertés au préalable, notamment quand ils sont stockés dans une capacité.

Les monomères à l'état solide peuvent être introduits dans l'extrudeuse ou le co-malaxeur par une seule entrée, ou des entrées différentes.

Il est également possible d'utiliser des mélanges de monomères de même nature, par exemple diacide ou diamine, sous forme solide.

Les monomères sous forme liquide peuvent être dosés via des doseurs pour liquide, généralement avec une précision de 1% par rapport à la consigne de débit, de préférence de 0,5% et plus préférentiellement de 0,1%. De préférence, ils sont introduits avec une pompe volumétrique équipée d'un débitmètre massique.

Ils peuvent être utilisés sous balayage de gaz inerte, de préférence d'azote, de préférence sous forme anhydre.

Ils peuvent être éventuellement inertés au préalable, notamment quand ils sont stockés dans une capacité.

Les monomères sous forme liquide peuvent être introduits par un seul point d'injection ou bien par des points d'injection différents.

Il est notamment possible d'injecter plusieurs monomères sous forme liquide par un unique point d'injection, après optionnellement un mélangeur statique, ou de manière préférée par des points d'injection différents.

Il est également possible d'utiliser des mélanges de monomères de même nature, par exemple diacide ou diamine, sous forme liquide.

Les monomères à l'état solide d'une part, et à l'état liquide, d'autre part, sont de préférence introduits dans l'extrudeuse ou co-malaxeur par des entrées séparées.

Les monomères à l'état solide à température ambiante peuvent être introduits dans l'extrudeuse ou co-malaxeur après fusion préalable. Dans ce cas, ils sont chauffés à une température supérieure à leur température de fusion, en particulier supérieure de 5°C, et notamment supérieure de 10°C.

Les monomères à l'état liquide à température ambiante peuvent être introduits dans l'extrudeuse ou co-malaxeur à température ambiante ou après chauffage.

*Extrudeuse ou co-malaxeur*

Les termes « extrudeuse » ou « co-malaxeur » sont employés dans la présente description dans leur sens commun et désignent des appareillages bien connus de l'homme du métier.

En particulier, par « extrudeuse », on entend un dispositif permettant de réaliser une extrusion, c'est-à-dire un procédé (thermo)mécanique par lequel le matériau compressé est contraint de traverser une filière, imposant un changement au matériau. Plus particulièrement, une extrudeuse est constituée d'au moins une vis sans fin qui tourne dans un cylindre appelé corps de l'extrudeuse, lui-même constitué de plusieurs zones de régulation thermique, et d'une chemise, partie au contact du matériau. Cette vis sans fin assure une étanchéité entre la vis et la paroi, et ce tout au long de la vis. Dans une extrudeuse, chaque vis d'acheminement est constituée de différents éléments qui se succèdent selon le sens d'acheminement. Ces différents éléments sont placés les uns à côté des autres sur un arbre de rotation. Dans une extrudeuse corotative toutes les vis d'acheminement tournent dans le même sens, qui correspond le plus souvent au sens horaire vu du côté de la sortie de l'extrudeuse. Les éléments sont situés les uns à côté des autres sur une même ligne. Les différentes vis d'acheminement constitutives d'une extrudeuse présentent toutes un même diamètre qui reste en général constant tout le long de la vis d'acheminement. Le plus souvent, ce diamètre appartient à la gamme allant de 6 à 134 mm. En général, les éléments situés dans un même plan transversal à la direction d'acheminement sont tous identiques. La vitesse de rotation des vis d'acheminement dépend de la nature de l'extrudeuse, mais est identique pour toutes les vis constitutives de l'extrudeuse. La vitesse de rotation de la vis sera, en général, de 10 rpm à 1200 rpm en fonction de l'extrudeuse.

Des exemples d'extrudeuse appropriées à la mise en œuvre du procédé selon l'invention sont notamment la gamme Evolum de la société Clextral, la gamme ZSK de la société Coperion ou la gamme STS de la société Coperion.

Les « co-malaxeurs », sont également des appareillages bien connus de l'homme du métier. A la différence des extrudeuses, les co-malaxeurs ne disposent généralement que d'une seule vis sans fin, qui tourne et avance/recule en même temps, et ne présentent une étanchéité entre la vis et la paroi qu'en certains points spécifiques de la vis.

Des exemples de co-malaxeur appropriés à la mise en œuvre du procédé selon l'invention sont notamment la gamme SJW de la société Xinda ou la gamme MDK de la société BUSS AG ou la gamme COMPEO de la société BUSS AG.

Le diamètre D de la vis de l'extrudeuse ou du co-malaxeur peut varier en fonction du débit de matières premières. Il est de préférence supérieur ou égal à 40 mm, encore plus de préférence supérieur ou égal à 100 mm.

Le rapport L/D, L désignant la longueur de la vis dans l'extrudeuse ou le co-malaxeur et D le diamètre de la vis, est de préférence supérieur ou égal à 30, préférentiellement supérieur ou égal à 40.

La vitesse de rotation de la vis peut varier dans une large mesure selon le débit et le rapport L/D. Il est de préférence supérieur ou égal à 600 rpm, encore plus de préférence supérieure ou égale à 800 rpm et mieux encore supérieure ou égale à 1000 rpm, le terme rpm désignant le nombre de rotations par minutes.

De préférence, le mélange est effectué dans une extrudeuse, comportant de manière préférée au moins deux vis, plus préférentiellement 2 vis, de préférence co-rotatives. Celles-ci vont permettre de mélanger efficacement le mélange réactionnel comprenant les monomères, et vont permettre d'acheminer celui-ci le long de l'axe du ou des vis depuis l'entrée de l'extrudeuse jusqu'à sa sortie, en traversant progressivement différentes zones de température, pour réaliser la fusion du mélange de monomères.

Les éléments constitutifs des vis sont choisis de telle sorte à constituer des séquences permettant soit majoritairement l'acheminement de la matière, soit majoritairement le mélange du ou des monomères introduits. Préférentiellement, ces séquences sont choisies de manière à former en aval du dernier point d'entrée des monomères solides un bouchon de matière renouvelé de manière continue, étanche aux vapeurs.

L'extrudeuse ou le co-malaxeur comprend des moyens de chauffage, tels que des moyens électriques ou un fluide caloporteur, les moyens électriques étant préférés. Ces moyens de chauffage viennent s'ajouter à l'énergie mécanique transférée sous forme d'énergie thermique au mélange de l'étape a).

La fusion du mélange comprenant les monomères de polyamide est réalisée dans l'extrudeuse ou co-malaxeur en chauffant le mélange à une température en sortie de l'étape a) notamment comprise entre 160°C et 300°C, de préférence entre 200 et 280 °C.

Un gradient de température le long de l'axe du ou des vis est de préférence utilisé entre l'entrée et la sortie de l'extrudeuse ou co-malaxeur.

Le mélange peut être réalisé sous balayage de gaz inerte, de préférence sous azote, notamment à contre-courant par rapport à la progression du mélange réactionnel dans l'extrudeuse ou le co-malaxeur.

Le mélange mis en œuvre dans l'étape a) peut également comprendre des additifs.

Les additifs peuvent être choisis parmi les additifs classiques utilisés dans les polyamides bien connus de l'homme du métier.

Par exemple ils sont choisis parmi un catalyseur, un antioxydant, un stabilisant à la chaleur, un absorbeur d'UV, un stabilisant à la lumière, un lubrifiant, une charge inorganique, un agent ignifugeant, un agent nucléant et un colorant, des fibres de renfort, une cire et leurs mélanges.

Avantageusement, ils sont choisis parmi un catalyseur, un stabilisant, un antioxydant, un limiteur de chaîne, un anti-mousse et/ou un mélange de ceux-ci.

Le catalyseur peut être notamment être l'acide ortho-phosphorique, l'acide hypophosphoreux ou l'acide phosphoreux. Le stabilisant peut être l'hypophosphite de sodium, une phosphite, ou un phénol. Le limiteur de chaîne peut être l'acide acétique, l'acide stéarique, ou l'acide benzoïque. L'antimousse peut être une huile de silicone.

Les additifs peuvent être introduits dans l'extrudeuse ou le co-malaxeur sous une forme liquide et/ou solide, notamment via une seule ou bien plusieurs entrées. Ils peuvent également être introduits en mélange avec un ou plusieurs monomères, seuls ou en mélange.

Dans un autre mode de réalisation, tout ou partie des additifs, peut être introduit sous forme liquide dans le réacteur-mélangeur, l'autre partie étant introduite dans l'extrudeuse. Ils sont introduits de préférence dans les premiers 2/5ème du réacteur-mélangeur, encore plus de préférence en amont du 1er orifice pour évacuation de la phase gaz.

*Injection d'additifs sous forme liquide dans l'extrudeuse*

Les additifs sous forme liquide sont introduits par un ou plusieurs points d'injection, de préférence avec un injecteur.

Les additifs liquides peuvent être introduits à température ambiante, chauffés sans être fondus, ou fondus. Ils peuvent également être ajoutés sous forme d'une solution aqueuse.

Plusieurs additifs sous forme liquide peuvent être injectés sous forme liquide sur un point d'injection, après éventuellement avoir été préalablement mélangés dans un mélangeur statique. De préférence, ils sont introduits par un ou plusieurs points d'injection.

Un ou plusieurs additif(s), ou une partie du ou des additif(s), sous forme liquide peuvent être introduits en mélange avec un ou plusieurs monomères liquides, ou une partie du ou des monomère(s) liquide(s), sur un ou plusieurs points d'introduction, après optionnellement avoir été préalablement mélangés avec un mélangeur statique.

Ces additifs sous forme liquide peuvent être utilisés sous balayage de gaz inerte, de préférence d'azote, de préférence anhydre, ou avec un ciel gazeux constitué de gaz inerte, de préférence d'azote, de préférence anhydre.

*Introduction d'additifs sous forme solide dans l'extrudeuse*

Les additifs sous forme solide sont introduits dans l'extrudeuse ou le co-malaxeur après dosage via des doseurs pour solide, de préférence gravimétriques.

Ils sont ajoutés avec une précision de l'ordre de 1% par rapport à la consigne, de préférence de l'ordre de 0,5 %, plus préférentiellement de l'ordre de 0,1 %.

Ces additif(s) sous la forme solide peuvent être utilisés sous balayage de gaz inerte, de préférence d'azote, de préférence anhydre.

Ils peuvent être introduits dans l'extrudeuse ou le co-malaxeur via un chargeur pneumatique, avec éventuellement une phase d'inertage comprenant au moins une étape utilisant un gaz inerte, de préférence d'azote, de préférence anhydre.

Ils peuvent être éventuellement inertés au préalable, notamment quand ils sont stockés dans une capacité.

Tout ou partie des additifs sous forme solide peuvent être préalablement mélangés avec d'autres additifs ou monomères sous forme solide avant leur introduction dans l'extrudeuse ou co-malaxeur.

Selon un mode de réalisation, tout ou partie des additifs peut être mélangé avec d'autres additifs ou monomères, de préférence solides, pour les ajouter dans l'extrudeuse ou bien dans le co-malaxeur.

Selon un mode de réalisation, les additifs peuvent être préalablement mélangés entre eux, puis ajoutés dans l'extrudeuse ou bien dans le co-malaxeur par un seul point d'entrée.

Selon un autre mode de réalisation, le mélange peut être réalisé dans la ligne d'introduction à partir de plusieurs capacités contenant chacune un additif ou un mélange d'additif, avec un ou plusieurs mélangeurs statiques pour réaliser le mélange dans la ligne d'introduction.

Selon un autre mode de réalisation, plusieurs additifs sont ajoutés dans l'extrudeuse ou bien dans le co-malaxeur de manière séparée. En d'autres termes, chaque additif est ajouté dans l'extrudeuse ou bien dans le co-malaxeur par un point d'entrée séparé.

Entre l'étape a) et l'étape b), il est possible de détourner le flux de matière à la sortie de l'extrudeuse ou du co-malaxeur et avant l'entrée du réacteur-mélangeur vers une purge, pendant des phases de transition du procédé, tel que l'arrêt et le démarrage.

L'extrudeuse peut ainsi comprendre en sortie un système de plusieurs vannes, ou de préférence une vanne à trois voies, de préférence avec le minimum de volume non-renouvelé.

Le transfert de la matière de l'extrudeuse ou du co-malaxeur vers le réacteur-mélangeur peut s'effectuer gravitairement, ou optionnellement à l'aide d'une pompe à engrenages.

Le produit obtenu à l'issue de l'étape a) est un mélange de monomères à l'état fondu, et constitue une phase liquide.

En fonction des conditions de mélange et des monomères mis en œuvre, il est possible que la réaction de polycondensation ait déjà commencé pendant l'étape a). Dans cette éventualité, le produit à l'issu de l'étape a) peut comprendre un prépolymère de très faible masse molaire. La viscosité inhérente du prépolymère mesurée selon la norme ISO 307:2019, mesurée dans le m-crésol est généralement strictement inférieure à 0,40 dL/g, de préférence inférieure ou égale à 0,30 dL/g, encore plus préférentiellement inférieure ou égale à 0,25 dL/g.

Le produit obtenu à l'issue de l'étape a) peut comprendre une phase vapeur essentiellement constituée de vapeur d'eau. Celle-ci provient essentiellement de l'eau de condensation générée au cours de l'étape de fusion lorsqu'au cours de celle-ci la réaction de polycondensation a déjà commencé.

De préférence, l'extrudeuse ou le co-malaxeur comprend moins de deux, encore plus de préférence aucun, dispositifs d'évacuation d'eau, notamment de l'eau formée par la réaction de polycondensation. De tels dispositifs sont également dénommés dans la suite de la description, dispositifs de dégazage. En effet, cela permet d'éviter l'entraînement avec l'eau évacuée de monomères passés sous forme de vapeurs dans les conditions de fusion et ainsi de conserver la stœchiométrie des monomères en sortie d'extrudeuse, à l'issue de l'étape a) et donc dans le mélange mis en œuvre à l'étape b), lors de la réaction de polycondensation dans le réacteur-mélangeur. De plus, cela simplifie le procédé et améliore la qualité produit en supprimant la gestion des remontées de matière au niveau des dispositifs de dégazage, exacerbées par la faible viscosité du produit dans l'extrudeuse. Enfin, la dévolatilisation de l'eau dans l'extrudeuse entraînerait le besoin de transférer des quantités d'énergie importantes au milieu dans l'extrudeuse, alors que par conception, l'efficacité de chauffe des extrudeuses, est faible et que du fait de la faible viscosité du produit fondu l'énergie mécanique transmise par les vis est très faible.

Avantageusement, la stœchiométrie et/ou la conversion du mélange de monomères peuvent être contrôlées dans l'extrudeuse. En particulier, une mesure des fins de chaîne du produit issu de l'étape a) peut être réalisée directement sur la phase liquide en sortie de l'extrudeuse ou le co-malaxeur sans l'isoler, et sans boucle de recirculation de la matière. De préférence, cette mesure est réalisée par spectrométrie proche-infrarouge (NIR), en utilisant une sonde de mesure positionnée dans le flux de la phase liquide. En fonction du résultat de la mesure, les débits de monomères en entrée de l'extrudeuse ou co-malaxeur et/ou les débits d'additifs peuvent être ajustés, de préférence automatiquement, de manière à obtenir la stœchiométrie et/ou la conversion voulues. De préférence, l'ajustement s'effectue en modifiant le ou les débits du ou des monomères liquides.

Le temps de séjour des monomères dans l'extrudeuse ou le co-malaxeur peut varier en fonction du débit, des caractéristiques et/ou des paramètres de fonctionnement de l'extrudeuse ou le co-malaxeur. Il est de préférence inférieur ou égal à 3 minutes, encore plus de préférence inférieur ou égal à 2 minutes, et plus préférentiellement inférieur ou égal à une minute.

*Etape b) - Polycondensation*

Le flux de matière, c'est-à-dire le produit obtenu à l'issue de l'étape a) est directement introduit dans le réacteur-mélangeur, en particulier sans qu'il y ait interruption du flux de matière entre l'extrudeuse ou co-malaxeur d'une part, et le réacteur-mélangeur d'autre part.

En particulier, le mélange obtenu à l'étape a) est introduit dans le réacteur-mélangeur à l'étape b), sans dégazage préalable.

Les monomères à l'état fondu et mélangés dans l'extrudeuse ou co-malaxeur continuent à réagir dans le réacteur-mélangeur.

Le réacteur-mélangeur mis en œuvre à l'étape b) est un réacteur classiquement utilisé dans la synthèse des polyamides, en particulier en tant que réacteur-finisseur, c'est-à-dire pour réaliser l'étape de finition des polyamides. Des exemples de réacteurs-mélangeurs utiles selon l'invention sont notamment décrits dans les demandes EP1436073 US8376607 et EP0715882.

Plus particulièrement, le réacteur-mélangeur est typiquement un réacteur d'axe horizontal. Il s'agit généralement d'un réacteur cylindrique horizontal ou d'un réacteur horizontal de section ovale.

La longueur et le diamètre du réacteur sont choisis, et le débit du flux réactionnel à l'état fondu, i.e. liquide peut être adapté et contrôlé pour ajuster le temps de séjour dans le réacteur et ainsi obtenir le degré d'avancement désiré.

La longueur du réacteur-mélangeur peut être de l'ordre de trois fois le diamètre interne du réacteur.

Le réacteur-mélangeur est partiellement rempli par la phase liquide. Généralement la proportion de remplissage du réacteur-mélangeur par la phase liquide est comprise entre 20 et 75% de l'espace initialement disponible dans le réacteur, ceci notamment de manière à favoriser le renouvellement de l'interface entre la phase liquide et la phase gazeuse, et ainsi l'élimination de l'eau formée au cours de la polycondensation.

Le réacteur-mélangeur comprend un ou plusieurs agitateurs. L'agitateur est monté horizontalement, en vue de sa rotation à l'intérieur du réacteur. Il peut s'agir par exemple d'une vis d'Archimède, d'un agitateur de type cage, ou de disques successifs, ajourés ou non, montés sur un arbre. Le diamètre de l'agitateur est en général un peu inférieur au diamètre intérieur du réacteur-mélangeur. L'axe de l'agitateur peut être excentré par rapport à l'axe du réacteur de finition. Ceci permet notamment la circulation de la phase gazeuse dans le réacteur. Cette circulation peut également être assurée par des trous présents par exemple au niveau des disques de l'agitateur. Dans le cas de plusieurs agitateurs, la structure de chaque agitateur peut être différente de celle de l'autre.

La vitesse de rotation de l'agitateur peut par exemple être comprise entre 5 et 100 tours/min.

L'agitateur peut comprendre plusieurs disques qui définissent des compartiments dans le réacteur-mélangeur. L'agitateur peut par exemple comprendre entre 5 et 15 disques. Le dernier compartiment du réacteur-mélangeur correspond à l'espace compris entre le dernier disque de l'arbre et la paroi verticale qui termine le réacteur-mélangeur.

Le réacteur-mélangeur est de préférence auto-nettoyant. Plus particulièrement, il s'agit d'un réacteur comportant deux arbres, de préférence co-rotatifs. Il peut notamment s'agir d'un réacteur-mélangeur de type REACOM commercialisé par la société BUSS-SMS-CANZLER, ou bien de type LIST CRP/TCP commercialisé par LIST TECHNOLOGY AG.

L'étape b) est réalisée à une température supérieure à la température de solidification du polyamide préparé, de préférence à une température de plus de 5°C par rapport à cette température de solidification, encore plus de préférence à une température de plus de 10°C par rapport à cette température de solidification.

La température de chauffage du réacteur de polycondensation peut être ajustée selon la cinétique intrinsèque de polycondensation du produit à synthétiser.

La réaction de polycondensation peut notamment être réalisée à une température comprise entre 240°C et 310°C, à une pression proche de la pression atmosphérique.

Le chauffage est réalisé en chauffant les parois des fourreaux du réacteur-mélangeur, ainsi que de préférence se(s) arbre(s) rotatifs. De préférence, le chauffage du réacteur-mélangeur est obtenu par fluide caloporteur. De préférence, le(s) arbre(s) rotatif(s) est/sont chauffés à une température supérieure ou égale à la température des parois des fourreaux du réacteur-mélangeur.

Le temps de séjour de la matière fondue dans le réacteur-mélangeur est supérieur ou égal à 5 minutes, de préférence supérieur ou égal à 10 minutes, plus particulièrement supérieur ou égal à 15 minutes. De préférence, le temps de séjour est inférieur ou égal à 60 minutes, de préférence inférieur ou égal à 50 minutes et plus particulièrement inférieur ou égal à 40 minutes.

Le niveau dans le réacteur de la phase liquide issue du produit obtenu à l'étape a) est de préférence supérieur à 20% du volume initialement libre dans le réacteur, plus préférentiellement supérieur à 25%, et de manière encore plus préférée supérieur ou égal à 35%.

Le niveau dans le réacteur de la phase liquide est de préférence inférieur à 75%, plus préférentiellement inférieur à 65%, et de manière encore plus préférée inférieur à 55%.

Le niveau de la phase liquide dans le réacteur-mélangeur peut être suivi par évaluation visuelle et/ou par pesée directe du réacteur et/ou mesuré par sonde de niveau et/ou par suivi gravimétrique des entrées/sorties du réacteur (bilan matière).

L'eau de condensation, produite principalement dans le réacteur-mélangeur mais également éventuellement lors de l'étape de fusion a), est avantageusement éliminée au moyen d'un flux de gaz inerte, préférentiellement conduit à contre-courant.

De préférence, l'injection de gaz inerte, de préférence d'azote, est réalisée dans le réacteur-mélangeur par un ou plusieurs points d'introduction. L'injection de gaz inerte peut avoir lieu dans la phase gazeuse ou dans la phase liquide du réacteur-mélangeur, de préférence dans la phase gazeuse. De préférence, le flux de gaz interne s'effectue dans un sens parallèle opposé à celui de l'écoulement du flux réactionnel liquide. Dans ce cas, l'introduction du gaz inerte s'effectue de préférence dans le dernier 4/5ème de la longueur du réacteur, encore plus de préférence dans l'avant-dernier compartiment du réacteur-mélangeur, encore plus avantageusement dans le dernier compartiment du réacteur-mélangeur. Le gaz inerte peut être chauffé avant d'être introduit dans le réacteur-mélangeur. La teneur en humidité du gaz inerte peut être modulée avant que celui-ci ne soit introduit dans le réacteur-mélangeur.

Le réacteur-mélangeur comprend un ou plusieurs orifices pour l'évacuation de la phase gaz du réacteur-mélangeur, préférentiellement en amont du point d'introduction du gaz inerte par rapport au sens d'écoulement du flux réactionnel liquide. Dans ce cas, le ou les orifices pour évacuation de la phase gaz sont de préférence situés dans les premiers 2/5ème du réacteur, encore plus de préférence entre le 2ème et le 3ème compartiment du réacteur.

Le débit de gaz inerte, notamment d'azote introduit dans le réacteur est défini de façon à obtenir un facteur de dilution de la vapeur d'eau F inférieur à 1,40, de préférence inférieur à 1,20, encore plus de préférence inférieur à 1,10.

$$\frac{d\acute{e}bit\ de\ gaz\ inerte + d\acute{e}bit\ vapeur\ d'eau}{d\acute{e}bit\ vapeur\ d'eau} = F$$

La phase gaz est généralement composée du gaz inerte, de l'eau de condensation, ainsi que de composés volatils résiduels de la polycondensation, notamment choisis parmi des additifs, des oligomères de masse molaire inférieure à 1000 g/mol, des aminoacides, des diamines, des composés cycliques, seuls ou en mélange.

En particulier dans le cas des compositions polyamides ne comportant que des monomères de type aminoacides, les composés sont constitués d'un mélange d'oligomères, d'aminoacides, de dimères cycliques et d'additifs.

Le réacteur-mélangeur peut être équipé d'un dispositif gérant la phase gaz en sortie du réacteur de polycondensation, de préférence à une pression proche de la pression atmosphérique, appelée ligne de dégazage.

De façon préférée, le réacteur-mélangeur comprend un orifice d'évacuation de la phase gaz connecté à la ligne de dégazage, à une pression proche de la pression atmosphérique.

Avantageusement, la ligne de dégazage comprend un dispositif appelé vanne de régulation qui permet d'ajuster la pression dans le réacteur mélangeur à une valeur proche de celle de la pression atmosphérique.

Avantageusement, la température de la ligne de dégazage est à une température supérieure à la température de ramollissement des oligomères, de préférence supérieure à la température de fusion des oligomères.

La température de la ligne de dégazage est comprise entre 120 et 300 °C, de préférence entre 180 et 300 °C, encore plus préférentiellement de 180 à 250 °C.

De préférence, le réacteur-mélangeur comprend au moins deux dispositifs de dégazage, de préférence identiques, tous deux connectés au réacteur par le même orifice, avec un seul fonctionnant à la fois, de manière à pouvoir réaliser leur nettoyage sans interrompre le procédé, en basculant de l'un à l'autre.

La vapeur d'eau et d'autres composés volatils tels que les monomères ou oligomères, qui sont ainsi éliminés, peuvent être séparés par des dispositifs conventionnels de distillation. Le ou les monomères et/ou oligomères récupérés au cours de cette séparation peuvent être réintroduits dans l'extrudeuse, seuls ou en mélange avec d'autres monomères non-recyclés.

Dans le cas de la synthèse de polyamide comprenant une ou plusieurs diamines, la phase gaz en sortie du réacteur-mélangeur peut notamment comporter une ou plusieurs de ces diamines.

De préférence, un condenseur partiel est positionné entre l'orifice d'évacuation de la phase gaz du réacteur-mélangeur et la ligne de dégazage afin de séparer la ou le mélange de diamines présent dans la phase gaz des autres composés. Le débit massique en diamine, seule ou en mélange avec d'autres diamines à la sortie du condenseur partiel, est inférieure ou égale à 10 % par rapport au débit total massique de diamine introduite dans l'étape a), de préférence inférieure ou égale à 5%, encore plus de préférence inférieure ou égale à 3 %, encore plus avantageusement inférieure à 1 %.

La ou le mélange de diamine ainsi récupéré peut ensuite être orienté vers une capacité, puis optionnellement subir un traitement visant à modifier sa composition, par exemple avec une colonne de rectification, pour la réutiliser comme monomère à l'entrée de l'étape a), de préférence en mélange avec la ou le mélange de diamines non-recyclé.

Il est également possible de réintroduire la ou le mélange de diamine ainsi récupéré dans le réacteur-mélangeur sans traitement supplémentaire, de préférence dans les premiers 2/8ème du réacteur, encore plus de préférence dans le premier 1/8ème du réacteur-mélangeur, et encore plus avantageusement au même niveau des vis du réacteur que celui de l'introduction du produit issu de l'étape a).

La température de consigne du condenseur partiel est comprise entre 90°C et 200°C, de préférence entre 95°C et 200°C, encore plus de préférence entre 100°C et 150°C, encore plus avantageusement entre 100°C et 120°C.

Avantageusement, un dévésiculeur, ou un matelas dévésiculeur, est intercalé entre l'orifice d'évacuation de la phase gaz du réacteur-mélangeur et le condenseur partiel.

La phase gaz passant dans la ligne de dégazage peut être ensuite refroidie à l'extrémité de cette dernière pour passer tout ou partie de ses constituants de l'état gazeux à l'état liquide et/ou à l'état solide. Cette opération peut être effectuée dans un condenseur, dont la température est inférieure à celle de la température de condensation du composé le plus volatil contenu dans la phase gaz. De préférence, un lavage de la phase gaz est réalisé par un solvant, de préférence de l'eau. Pour ce faire, il est possible d'utiliser un ou plusieurs dispositifs connectés en série, tels que des colonnes à pulvérisation, cyclone à pulvérisation, laveurs à garnissage, laveurs à plateaux, à co-courant, contre-courant, ou courants croisés.

La ou les phases ainsi obtenues peut (peuvent) ensuite être traitée(s) pour séparer les composés solubilisés ou dispersés sous forme de colloïdes dans le solvant et/ou séparer les solides du solvant. Plusieurs procédés sont connus de l'homme de l'art, tels que la coagulation, la floculation, l'électrocoagulation, la précipitation, l'adsorption, l'échange d'ion, la décantation, centrifugation, filtration, flottation.

Le produit peut être extrait du réacteur-mélangeur par une mono- ou double-vis de décharge verticale à travers une fenêtre de déversement pratiquée dans les fourreaux du réacteur-mélangeur. La fenêtre de déversement peut se situer sur une des parois du réacteur-mélangeur à son extrémité aval, ou sur la paroi verticale qui termine le réacteur-mélangeur.

Le ou les vis de décharge peuvent être chauffées, avantageusement à une température supérieure ou égale à la température des fourreaux du réacteur-mélangeur. Dans le cas d'une double-vis, celles-ci peuvent être de géométrie droite ou conique, et par rapport à la fenêtre de déversement du réacteur se situer l'une derrière l'autre ou bien l'une au même niveau que l'autre.

Le produit peut être ensuite repris par une pompe à engrenages, permettant de réguler le débit de sortie du réacteur. En aval de cette pompe à engrenages, peut être positionnée une filière chauffée, qui permet ensuite d'obtenir des granulés soit directement par une coupe en tête, soit avantageusement par la granulation de joncs obtenus par refroidissement du produit dans un bac à eau.

Optionnellement les granulés sont séchés en ligne par un flux d'air parallèle aux joncs et introduit dans le sens opposé du sens de défilement des joncs.

Une mesure de la stœchiométrie et/ou la conversion du produit issu de l'étape b) peut être réalisée. En particulier, une mesure des fins de chaîne du produit issu de l'étape b) peut être réalisée directement sur la phase liquide en sortie du réacteur mélangeur sans l'isoler, et sans boucle de recirculation de la matière. De préférence cette mesure est réalisée par spectrométrie proche-infrarouge (NIR), en utilisant une sonde de mesure positionnée dans le flux de la phase liquide.

Il est également possible de réaliser cette mesure sur les granulés solides issus de la sortie du réacteur mélangeur. De préférence cette mesure est réalisée par spectrométrie proche-infrarouge (NIR).

En fonction du résultat de la mesure, les débits de monomères et/ou les débits d'additifs peuvent être ajustés à l'entrée de l'extrudeuse ou du co-malaxeur et/ou dans le réacteur-mélangeur de préférence dans les premiers 2/8ème encore plus de préférence dans le premier 1/8ème du réacteur-mélangeur, et encore plus avantageusement au même niveau des vis du réacteur-mélangeur que celui de l'introduction du produit issu de l'étape a), de préférence automatiquement, de manière à obtenir la stœchio-métrie et/ou la conversion voulues. De préférence l'ajustement s'effectue en modifiant le ou les débits du ou des monomères liquides.

En fonction du résultat de la mesure, le débit et/ou la teneur en humidité du flux de gaz inerte dans le réacteur-mélangeur peut également être ajusté, de préférence automatiquement, de manière à obtenir la conversion voulue.

De façon avantageuse, le polyamide obtenu par le procédé selon l'invention, à l'issue de l'étape b), présente une viscosité en solution inhérente dans le méta-crésol, mesurée selon la norme ISO 307:2019, au moins égale à 0,80 dL/g, de préférence au moins égale à 1,10 dL/g, et encore plus préférentiellement au moins égale à 1,30 dL/g.

De façon avantageuse, le polyamide obtenu selon le procédé de l'invention, à l'issue de l'étape b) présente une viscosité en solution inhérente dans le méta-crésol, mesurée selon la norme ISO 307:2019, au plus égale à 2,50 dL/g, de préférence au plus égale à 2,20 dL/g, et encore plus préférentiellement au plus égale à 1,80 dL/g.

**Exemples**

Dans les exemples qui suivent, les abréviations suivantes sont utilisées :

A11 correspond à l'acide 11- amino-undécanoïque,
DA10 correspond à la décanediamine.
B correspond à la bis-(3-méthyl-4-aminocyclohexyl)-méthane (ou 3,3'-diméthyl-4,4'-diamino-dicyclohexyl-méthane) dénommé également BMACM ou MACM.
T correspond à l'acide téréphtalique.
BAC correspond à la 1,3-bis(aminométhyl)cyclohexane. Sa teneur en isomère cis est de 75%.

Une extrudeuse bi-vis corotative ZSK30 (diamètre égal à 30 millimètres et longueur égale à 38Diamètre) fabriquée par la société Werner & Pfleiderer est équipée de 2 doseurs gravimétriques positionnés à son début en zone d'alimentation et comporte 2 points d'injection sur les fourreaux 4 et 6. Le chauffage de cette extrudeuse est réalisé par l'intermédiaire d'éléments chauffants électriques, dans les conditions indiquées dans le tableau 2. Aucun puit de dégazage n'est présent.
La sortie de l'extrudeuse est reliée par l'intermédiaire d'un tube chauffé par un fluide caloporteur à un réacteur-mélangeur auto-nettoyant LIST TCP4 CONTI commercialisé par la société LIST TECHNOLOGY AG, de volume libre de 7.4 litres. Le transfert de produit entre la sortie de l'extrudeuse et l'entrée du réacteur-mélangeur s'effectue gravitairement.
Le réacteur-mélangeur est équipé de deux agitateurs co-rotatifs constituant onze chambres, et ses parois ainsi que les deux arbres d'agitation sont chauffés à la même température par fluide caloporteur. L'introduction du produit dans le réacteur s'effectue au niveau du premier compartiment. L'extraction du produit du réacteur-mélangeur est assurée par deux vis de décharge verticales à travers une fenêtre de déversement située sur la paroi verticale qui termine le réacteur-mélangeur. Une pompe à engrenage positionnée en aval de ces vis de décharge permet de réguler le débit de sortie, et de transporter le produit à travers une filière chauffée. Le jonc ainsi obtenu est refroidi dans un bac à eau puis granulé.
Un flux d'azote est introduit dans la phase gazeuse du réacteur à contre-courant dans le neuvième compartiment. La phase gaz du réacteur est évacuée au niveau du quatrième compartiment. La phase gaz traverse d'abord un condenseur partiel chauffé par fluide caloporteur, réintroduisant les condensats dans le réacteur au niveau du quatrième compartiment, puis en aval une ligne de dégazage chauffée électriquement. A l'extrémité de cette ligne de dégazage est situé un condenseur total chauffé par fluide caloporteur.
La fusion de monomères ainsi que l'ajout de différents additifs sont réalisés dans l'extrudeuse. Les monomères correspondent aux compositions de PA11 (polymère A), PA 11/10T (polymère B), PA 11/B10 (polymère C), et PA BACT/10T (polymère D).
Les diacides sont introduits sous forme solide dans la trémie d'alimentation, et leurs débits massiques contrôlés par les doseurs gravimétriques.
Les diamines sont chauffées à 80 °C dans une capacité puis injectées en fourreau 6 à l'aide d'une pompe volumétrique asservie à un débitmètre massique afin de contrôler leurs débits massiques. Dans le cas du polymère D, les deux diamines 1,3-1
BAC et DA10 sont mélangées au préalable dans la capacité, puis injectées en un seul point d'injection en fourreau 6.
Les additifs sous forme liquide sont introduits dans l'extrudeuse au niveau du fourreau 4 par injection, et/ou dans le réacteur mélangeur au niveau du premier compartiment. Les additifs sous forme solide sont introduits en sous la forme d'un mélange à sec (« dry-blend ») avec un des monomères. Les conditions d'introduction sont décrites dans le tableau 1. Dans le cas de l'exemple 5, un mélange de deux additifs est injecté dans l'extrudeuse en un seul point d'injection en fourreau 4.

Tableau 1

|  | Acide stéarique | Acide acétique Solution 80 %w | Acide benzoïque | NaH2PO2 Solution 60 %w | H3PO4 Solution 85 %w | H3PO2 Solution 50 %w |
|---|---|---|---|---|---|---|
| Forme | Solide | Liquide | Solide | Liquide | Liquide | Liquide |
| Introduction | Dry-blend Extrudeuse | Injection Extrudeuse | Dry-blend Extrudeuse | Injection Extrudeuse | Injection Réacteur-mélangeur | Injection Réacteur-mélangeur |

Tableau 2

| | Vitesse vis extrudeuse | Fourreau 1 | Fourreau 2 Fourreau 3 | Fourreau 4 Fourreau 5 | Fourreau 6 Fourreau 7 | Fourreau 8 Fourreau 9 | Fourreau 10 Fourreau 11 | Fourreau 12 |
|---|---|---|---|---|---|---|---|---|
| | RPM | °C | °C | °C | °C | °C | °C | °C |
| POLYMERE A | 340 | 30 | 100 | 190 | 190 | 190 | 190 | 190 |
| POLYMERE B | 280 | 30 | 50 | 150 | 200 | 250 | 250 | 250 |
| POLYMERE C | 340 | 30 | 50 | 150 | 200 | 250 | 250 | 250 |
| POLYMERE D | 280 | 30 | 50 | 150 | 200 | 250 | 250 | 250 |

Tableau 3

| | Unité | EX1 | EX2 | EX3 | EX4 | EX5 |
|---|---|---|---|---|---|---|
| Point de solidification | °C | 190 | 190 | 260 | 260 | 260 |
| A11 | kg/h | 11 | 11 | 2.88 | 2.94 | 2.71 |
| DA10 | kg/h | - | - | 3.89 | 4.03 | 3.6 |
| AT | kg/h | - | - | 3.41 | 3.48 | 3.21 |
| DC10 | kg/h | - | - | - | - | - |
| 1,3-BAC | kg/h | - | - | - | - | - |
| BMACM | kg/h | - | - | - | - | - |
| Débit total monomères | kg/h | 11 | 11 | 10.18 | 10.45 | 9.52 |
| Acide stéarique | g/h | - | - | 185 | - | - |
| Acide acétique solution 80 %w | g/h | - | - | - | 100 | 90 |
| Acide benzoïque | g/h | - | - | - | - | - |
| NaH2PO2 solution 60 %w | g/h | - | - | 50 | 50 | 50 |
| H3PO4 solution 85 %w | g/h | 20 | 20 | - | - | - |
| H3PO2 solution 50 %w | g/h | - | - | - | - | - |
| Niveau | % | 42 | 42 | 45 | 45 | 42 |
| Temps de séjour | minutes | 15 | 15 | 17 | 17 | 17 |
| Vitesse agitation réacteur | RPM | 60 | 60 | 60 | 60 | 60 |
| T°C réacteur | °C | 250 | 250 | 300 | 300 | 300 |
| T°C condenseur partiel | °C | 230 | 230 | 110 | 140 | 180 |
| T°C ligne dégazage | °C | 230 | 230 | 180 | 180 | 180 |
| T°C condenseur total | °C | 80 | 80 | 80 | 80 | 80 |
| Débit azote réacteur-mélangeur | L/h | 5 | 30 | 50 | 50 | 50 |
| Facteur dilution | - | 1.00 | 1.02 | 1.04 | 1.04 | 1.04 |
| Pertes Diamines | % | - | - | 7.3 | 8.6 | 9.5 |
| Viscosité en solution Sortie réacteur-mélangeur | dL/g | 1.44 | 1.65 | 1.22 | 1.22 | 1.13 |
| Viscosité en solution Sortie extrudeuse | dL/g | 0.15 | 0.15 | 0.10 | 0.10 | 0.10 |

| | Unité | EX6 | EX7 | EX8 | EX9 | EX10 |
|---|---|---|---|---|---|---|
| Point de solidification | °C | 260 | 260 | 150 | 150 | 275 |

(suite)

| | Unité | EX6 | EX7 | EX8 | EX9 | EX10 |
|---|---|---|---|---|---|---|
| A11 | kg/h | 2.94 | 2.94 | 0.98 | 0.98 | - |
| DA10 | kg/h | 3.97 | 3.97 | - | - | 2.81 |
| AT | kg/h | 3.48 | 3.48 | - | - | 4.42 |
| DC10 | kg/h | - | - | 3.98 | 3.98 | - |
| 1,3-BAC | kg/h | - | - | - | - | 1.79 |
| BMACM | kg/h | - | - | 4.84 | 4.84 | - |
| Débit total monomères | kg/h | 10.39 | 10.39 | 9.80 | 9.80 | 9.02 |
| Acide stéarique | g/h | 185 | 185 | - | - | |
| Acide Acétique solution 80 %w | g/h | - | - | 14 | 14 | |
| Acide benzoïque | g/h | - | - | - | - | 95 |
| NaH2PO2 solution 60 %w | g/h | 50 | 50 | - | - | 43 |
| H3PO4 solution 85 %w | g/h | - | - | - | - | - |
| H3PO2 solution 50 %w | g/h | - | - | 8 | 8 | - |
| Niveau | % | 45 | 45 | 45 | 45 | 45 |
| Temps de séjour | minutes | 17 | 17 | 18 | 18 | 20 |
| Vitesse agitation réacteur | RPM | 60 | 60 | 60 | 60 | 60 |
| T°C réacteur | °C | 300 | 300 | 280 | 280 | 300 |
| T°C condenseur partiel | °C | 110 | 110 | 110 | 110 | 110 |
| T°C ligne dégazage | °C | 180 | 180 | 180 | 180 | 180 |
| T°C condenseur total | °C | 80 | 80 | 80 | 80 | 80 |
| Débit azote réacteur-mélangeur | L/h | 120 | 200 | 50 | 200 | 50 |
| Facteur dilution | - | 1.09 | 12.14 | 1.05 | 1.19 | 1.04 |
| Pertes Diamines | % | 7.6 | 8.2 | 2.5 | 2.6 | 7.5 |
| Viscosité en solution Sortie réacteur-mélangeur | dL/g | 1.41 | 1.59 | 1.02 | 1.21 | 0.90 |
| Viscosité en solution Sortie extrudeuse | dL/g | 0.10 | 0.10 | 0.10 | 0.10 | 0.10 |

Dans les tableaux 1 à 3 ci-dessus, les termes utilisés ont les significations suivantes :

« %w » signifie un pourcentage en poids ;
« Niveau » se réfère à la proportion du volume libre du réacteur-mélangeur occupé par le mélange obtenu à l'issue de l'étape a), introduit dans le réacteur-mélangeur ;
« temps de séjour » se réfère au temps de séjour dans le réacteur-mélangeur ;
« facteur de dilution » : Le débit de gaz inerte, notamment d'azote introduit dans le réacteur est défini de façon à obtenir un facteur de dilution de la vapeur d'eau F inférieur à 1,40, de préférence inférieur à 1,20, encore plus de préférence inférieur à 1,10.

$$\frac{d\acute{e}bit\ de\ gaz\ inerte + d\acute{e}bit\ vapeur\ d'eau}{d\acute{e}bit\ vapeur\ d'eau} = F$$

« Pertes Diamine » se réfère au poids de la totalité des monomères diamines récupérés en sortie du condenseur total équipant la ligne de dégazage, par rapport au poids total de monomères diamines introduits dans l'extrudeuse.

**Revendications**

1. Procédé continu de préparation de polyamide par condensation comprenant les étapes consécutives suivantes :

   a) fusion d'un mélange comprenant des monomères de polyamide dans une extrudeuse ou un co-malaxeur, lesdits monomères étant introduits dans l'extrudeuse ou le co-malaxeur sans ajout d'eau, et
   b) réaction de polycondensation du mélange obtenu à l'issue de l'étape a) dans un réacteur-mélangeur d'axe horizontal,

   les étapes a) et b) du procédé étant réalisées à une pression comprise entre la pression atmosphérique et la pression atmosphérique +100 mbars, avantageusement une pression comprise entre la pression atmosphérique et la pression atmosphérique +50 mbars, encore plus avantageusement une pression comprise entre la pression atmosphérique et la pression atmosphérique +10 mbars.

2. Procédé selon la revendication 1, **caractérisé en ce que** le polyamide préparé selon le procédé est un polyamide aliphatique, cycloaliphatique, arylaliphatique, aromatique, ou semi-aromatique.

3. Procédé selon l'une quelconque des revendications précédentes, **caractérisé en ce que** le polyamide est notamment choisi parmi le polyamide 11,11/B10, 11/BI/BT, B10, B12, MXD10, MXD.6, 11/10T, 11/BACT/10T, BACT/10T.

4. Procédé selon l'une quelconque des revendications précédentes, **caractérisé en ce que** le mélange à l'étape a) comprend des additifs.

5. Procédé selon la revendication 4, **caractérisé en ce que** les additifs comprennent au moins un catalyseur, au moins un stabilisant, au moins un antioxydant, au moins un limiteur de chaîne, et au moins un anti-mousse.

6. Procédé selon l'une quelconque des revendications précédentes, **caractérisé en ce que** l'étape a) est réalisée dans une extrudeuse, de préférence comportant au moins deux vis, plus préférentiellement deux vis, notamment co-rotatives.

7. Procédé selon l'une quelconque des revendications précédentes, **caractérisé en ce que** la fusion du mélange de monomères est réalisée dans l'extrudeuse ou le co-malaxeur en chauffant le mélange à une température en sortie de l'étape a) comprise entre 160°C et 300°C

8. Procédé selon l'une quelconque des revendications précédentes, **caractérisé en ce que** le mélange obtenu à l'étape a) est introduit dans le réacteur-mélangeur à l'étape b), sans dégazage préalable.

9. Procédé selon l'une quelconque des revendications précédentes, **caractérisé en ce que** le réacteur-mélangeur comporte au moins deux arbres comportant des éléments d'agitation, de préférence co-rotatifs.

10. Procédé selon l'une quelconque des revendications précédentes, **caractérisé en ce que** les arbres d'agitation du réacteur-mélangeur sont chauffés.

11. Procédé selon l'une quelconque des revendications précédentes, **caractérisé en ce que** la réaction de polycondensation à l'étape b) est réalisée à une température d'au plus 50°C supérieure à la température de solidification du polyamide, et/ou supérieure de plus de 5°C par rapport à cette température de solidification, de préférence à une température comprise entre 240°C et 310°C.

12. Procédé selon l'une quelconque des revendications précédentes, **caractérisé en ce que** l'étape b) est réalisée sous balayage de gaz inerte, de préférence à contre-courant.

**Patentansprüche**

1. Kontinuierliches Verfahren zur Herstellung von Polyamid durch Kondensation, das die folgenden aufeinanderfolgenden Schritte umfasst:

   a) Schmelzen eines Gemischs, das Polyamidmonomere umfasst, in einem Extruder oder einem Co-Mischer, wobei die Monomere ohne Zugabe von Wasser in den Extruder oder Co-Mischer eingeführt werden, und
b) Polykondensationsreaktion des nach Schritt a) erhaltenen Gemischs in einem horizontalachsigen Mischreaktor,

wobei die Schritte a) und b) des Verfahrens bei einem Druck durchgeführt werden, der zwischen dem atmosphärischen Druck und dem atmosphärischen Druck +100 mbar liegt, in vorteilhafter Weise bei einem Druck, der zwischen dem atmosphärischen Druck und dem atmosphärischem Druck +50 mbar liegt, noch vorteilhafter bei einem Druck, der zwischen dem atmosphärischen Druck und dem atmosphärischem Druck +10 mbar liegt.

2. Verfahren nach Anspruch 1, **dadurch gekennzeichnet, dass** das nach dem Verfahren hergestellte Polyamid ein aliphatisches, cycloaliphatisches, arylaliphatisches, aromatisches oder semi-aromatisches Polyamid ist.

3. Verfahren nach einem der vorstehenden Ansprüche, **dadurch gekennzeichnet, dass** das Polyamid insbesondere aus Polyamid 11,11/B10, 11/BI/BT, B10, B12, MXD10, MXD.6, 11/10T, 11/BACT/10T, BACT/10T ausgewählt wird.

4. Verfahren nach einem der vorhergehenden Ansprüche, **dadurch gekennzeichnet, dass** das Gemisch in Schritt a) Additive umfasst.

5. Verfahren nach Anspruch 4, **dadurch gekennzeichnet, dass** die Additive mindestens einen Katalysator, mindestens einen Stabilisator, mindestens ein Antioxidans, mindestens einen Kettenbegrenzer und mindestens einen Entschäumer umfassen.

6. Verfahren nach einem der vorhergehenden Ansprüche, **dadurch gekennzeichnet, dass** Schritt a) in einem Extruder durchgeführt wird, der vorzugsweise mindestens zwei Schnecken, noch bevorzugter zwei Schnecken, insbesondere Gleichlaufschnecken, aufweist.

7. Verfahren nach einem der vorhergehenden Ansprüche, **dadurch gekennzeichnet, dass** das Schmelzen des Monomergemischs im Extruder oder im Co-Mischer durch Erhitzen des Gemisches auf eine Temperatur am Ausgang von Schritt a) zwischen 160 °C und 300 °C erfolgt.

8. Verfahren nach einem der vorhergehenden Ansprüche, **dadurch gekennzeichnet, dass** das in Schritt a) erhaltene Gemisch in Schritt b) ohne vorherige Entgasung in den Mischreaktor eingeführt wird.

9. Verfahren nach einem der vorstehenden Ansprüche, **dadurch gekennzeichnet, dass** der Mischreaktor mindestens zwei vorzugsweise gleichlaufende Wellen mit Rührelementen aufweist.

10. Verfahren nach einem der vorstehenden Ansprüche, **dadurch gekennzeichnet, dass** die Rührwellen des Mischreaktors beheizt werden.

11. Verfahren nach einem der vorhergehenden Ansprüche, **dadurch gekennzeichnet, dass** die Polykondensationsreaktion in Schritt b) bei einer Temperatur von höchstens 50 °C über der Erstarrungstemperatur des Polyamids und/oder um mehr als 5 °C über dieser Erstarrungstemperatur, vorzugsweise bei einer Temperatur zwischen 240 °C und 310 °C, durchgeführt wird.

12. Verfahren nach einem der vorhergehenden Ansprüche, **dadurch gekennzeichnet, dass** Schritt b) unter Inertgasstrom, vorzugsweise im Gegenstrom, durchgeführt wird.

## Claims

1. A continuous method for preparing polyamide by condensation comprising the following consecutive steps:

    a)melting a mixture comprising polyamide monomers in an extruder or co-kneader, the monomers being delivered to the extruder or co-kneader without the addition of water, and
    b)carrying out a polycondensation reaction of the mixture obtained after step a) in a horizontal mixer-reactor, steps a) and b) of the method being carried out at a pressure between atmospheric pressure and atmospheric pressure +100 mbar, advantageously a pressure between atmospheric pressure and atmospheric pressure +50 mbar, even more advantageously a pressure between atmospheric pressure and atmospheric pressure +10 mbar.

2. The method according to claim 1, **characterised in that** the polyamide prepared according to the method is an aliphatic, cycloaliphatic, arylaliphatic, aromatic or semi-aromatic polyamide.

3. The method according to any of the preceding claims, **characterised in that** the polyamide is particularly chosen from among polyamide 11, 11/B10, 11/BI/BT, B10, B12, MXD10, MXD.6, 11/10T, 11/BACT/10T, BACT/10T.

4. The method according to any of the preceding claims, **characterised in that** the mixture at step a) comprises additives.

5. The method according to claim 4, **characterised in that** the additives comprise at least one catalyst, at least one stabiliser, at least one antioxidant, at least one chain-limiting agent and at least one anti-foaming agent.

6. The method according to any of the preceding claims, **characterised in that** step a) is performed in an extruder, preferably having at least two screws, preferably two screws, in particular co-rotating.

7. The method according to any of the preceding claims, **characterised in that** melting of the mixture of monomers is performed in the extruder or co-kneader by heating the mixture to an output temperature of step a) of between 160 °C and 300 °C.

8. The method according to any of the preceding claims, **characterised in that** the mixture obtained after step a) is fed into the mixer-reactor at step b) without prior degassing.

9. The method according to any of the preceding claims, **characterised in that** the mixer-reactor comprises at least two shafts comprising agitation elements, preferably co-rotating.

10. The method according to any of the preceding claims, **characterised in that** the agitation shafts of the mixer-reactor are heated.

11. The method according to any of the preceding claims, **characterised in that** the polycondensation reaction at step b) is conducted at a temperature that is at most 50 °C higher than the solidification temperature of the polyamide, and/or more than 5°C higher than this solidification temperature, preferably at a temperature of between 240 °C and 310 °C.

12. The method according to any of the preceding claims, **characterised in that** step b) is performed under inert gas flushing, preferably in countercurrent-flow.

[Fig 1]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0410649 A
- EP 0410650 A
- EP 2877516 A
- EP 1436073 A
- US 8376607 B
- EP 0715882 A